## Europäisches Patentamt

## European Patent Office

## Office européen des brevets

(19)

(11) Veröffentlichungsnummer: **0 123 086**
**B1**

(12) 

# EUROPÄISCHE PATENTSCHRIFT

(45) Veröffentlichungstag der Patentschrift:
06.08.86

(21) Anmeldenummer: 84102545.5

(22) Anmeldetag: 09.03.84

(51) Int. Cl.⁴: **B 01 D 53/04,** C 01 B 13/02, C 01 B 21/04

(54) Adsorber.

(30) Priorität: 24.03.83 DE 3310759

(43) Veröffentlichungstag der Anmeldung:
31.10.84 Patentblatt 84/44

(45) Bekanntmachung des Hinweises auf die Patenterteilung:
06.08.86 Patentblatt 86/32

(84) Benannte Vertragsstaaten:
CH DE FR GB IT LI SE

(56) Entgegenhaltungen:
DE - A - 2 548 290
DE - B - 2 449 841
US - A - 4 302 224
US - A - 4 365 981

J.H. PERRY "Chemical Engineers Handbook" 4. Auflage 1963, Mc.Graw-Hill Company, Seiten 16-19

(73) Patentinhaber: Linde Aktiengesellschaft,
Abraham-Lincoln-Strasse 21, D-6200 Wiesbaden (DE)

(72) Erfinder: Winkler, Dietmar, Dipl.-Ing., Starnberger Strasse 21, D-8000 München 71 (DE)
Erfinder: Güntner, Andreas, Hans-Kreis-Strasse 12, D-8023 Pullach (DE)
Erfinder: Wenzig, Manfred, Pirolweg 1, D-8223 Trostberg (DE)

(74) Vertreter: Schaefer, Gerhard, Dr., Linde Aktiengesellschaft Zentrale Patentabteilung, D-8023 Höllriegelskreuth (DE)

EP 0 123 086 B1

# Beschreibung

Die Erfindung betrifft Adsorber für Druckwechselbetrieb mit Adsorptionsmittelfüllung, Gaseinlass und Gasaustritt.

Adsorber dieser Art sind aus der DE-AS 2548290 bekannt. Die bekannten Adsorberbehälter sind zylindrisch und besitzen an den einander gegenüberliegenden Stirnseiten je einen Einlass bzw. einen Austritt für das zu reinigende Gas.

Anlagen, die Adsorber dieser bekannten Art mit grosser Schütthöhe verwenden, weisen verschiedene Nachteile auf, die insbesondere bei kleinen Einheiten ins Gewicht fallen. Die Adsorber müssen meist liegend transportiert und am Aufstellungsort wieder aufgerichtet werden. Dies erfordert eine aufwendige Tragkonstruktion sowie entsprechende Hebezeuge bei Transport und Montage. Eine nachträgliche Aufstellung der bekannten Adsorber in vorhandenen Räumen ist damit sehr eingeschränkt. Ein weiterer Nachteil der bekannten Adsorber liegt darin, dass die am oberen Ende anzuschliessenden Ventile entweder oben angeordnet werden, was meist eine zusätzliche Bühne erfordert und die Herstellung verteuert oder in einem unten liegenden Ventilblock zusammengefasst werden, was mehr Verrohrung und grössere Totvolumina sowie die für eine Komplettbaugruppe ungünstige Bauform mit sich bringt. Die Adsorberkonstruktion selbst ist aufwendig wegen der Gasanschlüsse und Siebeinbauten in Verbindung mit Nachfülleinrichtungen am oberen Ende, wobei durch die Druckwechselbeanspruchung die Möglichkeiten für billige Konstruktionen sehr begrenzt sind.

Der vorliegenden Erfindung liegt daher die Aufgabe zugrunde, einen kostengünstigen Adsorber zur Verfügung zu stellen, der die aufgezeigten Mängel überwindet.

Diese Aufgabe wird erfindungsgemäss dadurch gelöst, dass der Adsorber als abgewinkeltes Rohr mit oben liegendem Scheitel ausgebildet ist.

Bei dem erfindungsgemässen Adsorber wird somit die meist erforderliche grosse Weglänge bei insgesamt verringerter Bauhöhe dadurch erreicht, dass der Adsorber abgewinkelt oder gebogen ausgebildet ist. Der Grad der Abwinklung ergibt sich aus den anzustrebenden Abmessungen der Adsorberanlage.

Der überragende Vorteil des erfindungsgemässen Adsorbers liegt eindeutig in der trotz grosser Schütthöhe niedrigen Bauhöhe. Dadurch erhält eine Adsorbereinheit eine für Fertigung, Transport, Montage und Aufstellung sowie Wartung optimale Form.

Vorteilhaft sind bei dem erfindungsgemässen Adsorber am Scheitel ein Nachfüllstutzen für das Adsorptionsmittel und an den Adsorberenden ein Gaseinlass- und ein Gasaustrittsstutzen angeordnet. Dadurch wird die Verrohrung mit für Herstellung und Wartung günstiger Ventilanordnung wesentlich vereinfacht.

Der Gaseinlass und der Gasaustritt sind je mit einem Sieb verschlossen.

Ohne Mehrkosten ist es bei dem erfindungsgemässen Adsorber weiterhin möglich, die beiden Schenkel zur Anpassung an die Strömungsmengen mit unterschiedlichen Durchmessern auszuführen.

Als weitere vorteilhafte Ausgestaltung ist vorgesehen, dass an den Gaseinlass und den Gasaustritt je ein Ventilblock mit in die Hauptanschlussleitungen integrierten Ventilen angeschlossen ist. Die Verrohrung wird durch den Einsatz eines Ventilblockes auf Bruchteile des üblicherweise erforderlichen Umfanges beschränkt. Insbesondere bei Serienanfertigung ist diese Ausführung vorteilhaft, da der Ventilblock maschinell gefertigt sein kann.

Um die Stabilität des Adsorbers zu gewährleisten, sind die Adsorberschenkel zweckmässig in einem Grundrahmen befestigt. Dieser Grundrahmen kann dabei mit Vorteil als Schalldämpferkasten ausgebildet sein.

In Weiterbildung des Erfindungsgedankens können in dem unter dem Adsorber befindlichen Raum Ventile und andere Bauteile einer Adsorberanlage, wie z.B. Pufferbehälter, Kompressoren, Schalldämpfer, Mess- und Steuereinrichtungen, untergebracht werden.

Eine Adsorberanlage mit mindestens zwei Adsorbern und zugehörigen Ventilen, insbesondere Schalt-, Absperr- und Drosselventilen, kann derart ausgeführt sein, dass die Ventile in mindestens einen Ventilblock integriert und die Adsorber an den Ventilblock angeschlossen sind. Als Schalt- und Absperrventile werden keine handelsüblichen Ventile verwendet, sondern auf die verfahrensnotwendige Funktion abgestimmte Stellkolben mit direkt angesetzten Ventiltellern. Dabei werden Federn und Druckluft und zum Teil auch der jeweilige Druck des Verfahrensmediums zur Betätigung herangezogen.

Um bei den relativ grossen, von den Adsorbermassen bestimmten Abmessungen des Ventilblockes Gewicht und Kosten zu sparen, sind bevorzugt mehrere kleine Blöcke mittels geraden Rohren verbunden, in die die Blöcke eingeklebt sind. Die Ventilsitze werden in diesen geraden Rohre eingearbeitet. In gleicher Weise kann noch ein Block mit zusätzlichen Ventilen angefügt werden.

Die Adsorber werden zweckmässig mit ihren Anschlussflanschen direkt an den Ventilblock angeflanscht.

Die konstruktive Gestaltung des Ventilblockes eignet sich für mechanische Bearbeitung ohne die üblichen Verrohrungs- und Schweissarbeiten. Teure Schaltventile der üblichen Art müssen nicht verwendet werden.

Mit der erfindungsgemässen Anordnung gestalten sich der Zusammenbau der Adsorberanlage aber auch Reparaturen und Wartungsarbeiten höchst einfach und damit zeitsparend.

Der Ventilblock ist so gestaltet, dass er in gleicher Ausführung für unterschiedliche Adsorbergrössen und damit unterschiedliche Anlagenleistungen verwendet werden kann.

Überdies können die Magnetventile für die Ansteuerung der Stellkolben in den Ventilblock − vorzugsweise in die Zylinderdeckel — integriert werden.

Eine Adsorberanlage, die neben mindestens zwei erfindungsgemässen Adsorbern Ventile, Pufferbehälter, Kompressoren, Schalldämpfer sowie Mess- und Steuereinrichtungen aufweist, kann nach einer weiteren Ausgestaltungsform in Containerbauweise ausgeführt sein.

Vorteilhaft ist es auch, die Fläche zwischen den äusseren Adsorberschenkeln mit einer Verkleidung, z.B. aus Blech, zu versehen. Dadurch entsteht auf äusserst billige Weise eine geschlossene Anlage, die in diesem Zustand transportiert und auch im Freien aufgestellt werden kann.

Die erfindungsgemässen Adsorber können mit besonderem Vorteil zur adsorptiven Gewinnung von Sauerstoff aus Luft verwendet werden. Zur weiteren bevorzugten Anwendung kommen die erfindungsgemässen Adsorber, wenn Stickstoff durch adsorptive Luftzerlegung gewonnen werden soll.

Im folgenden sei der erfindungsgemässe Adsorber anhand eines in vier Figuren schematisch dargestellten Ausführungsbeispiels näher erläutert.

Es zeigen:

Figure 1 einen Adsorber mit im Raum unter dem Absorber angeordneten Ventilen und anderen Bauteilen einer Adsorberanlage;

Figure 2 einen Adsorber mit Verkleidung zwischen den äusseren Adsorberschenkeln;

Figur 3 eine Adsorberanlage in Containerbauweise;

Figur 4 einen um 180° abgewinkelten Adsorber mit Ventilblock und Auspuffschalldämpferkasten.

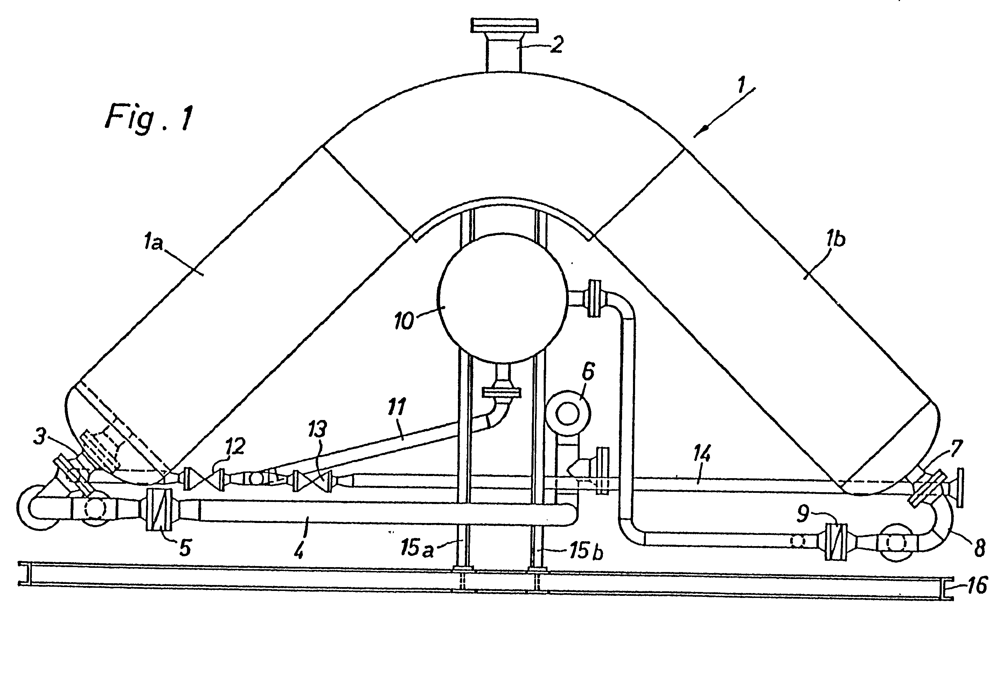

Der Adsorber 1 gemäss Figur 1 ist als abgewinkeltes Rohr ausgebildet. Die beiden Schenkel 1a und 1b haben gleichen Durchmesser, z.B. 600 mm. Am Scheitel des Adsorbers 1 ist ein Nachfüllstutzen 2 für das Adsorptionsmittel vorgesehen. Der Schenkel 1a ist über einen Gaseinlassstutzen 3 und Hauptanschlussleitung 4 mit Ventil 5 mit dem Gaseintritt 6 verbunden. Der Schenkel 1b ist über einen Gasaustrittsstutzen 7 und über Leitung 8 mit einem Pufferbehälter 10 für das Produktgas verbunden. Der Pufferbehälter 10 steht über eine Messstrecke 11 über Ventil 12 mit dem Gaseinlassstutzen 3 einerseits und über Ventil 13 mit einer Gasauslassleitung 14 andererseits in Verbindung. Der mit einem Adsorptionsmittel gefüllte Adsorber ist über Stützen 15a, 15b in einem Grundrahmen 16 verankert. Wie der Figur 1 zu entnehmen ist, sind die bei der Adsorberanlage erforderlichen Bauteile, im gezeigten Fall bis auf einen nicht dargestellten Kompressor, in den Raum unter dem Adsorber untergebracht. Die Bauhöhe des Adsorbers beträgt im vorliegenden Falle z.B. 2700 mm gemessen vom Grundrahmen bis zum Nachfüllstutzen 2.

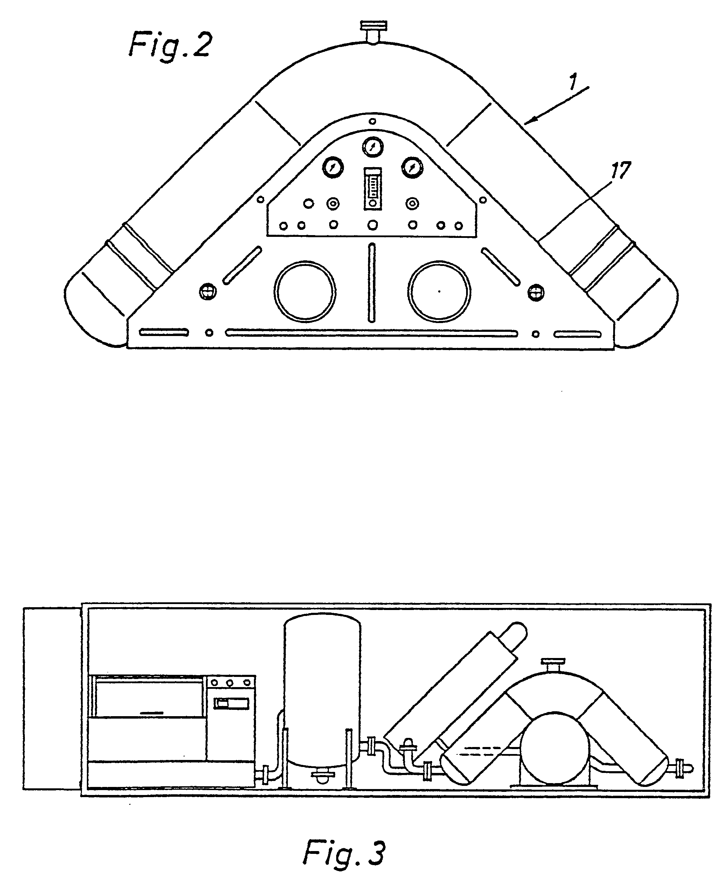

Figur 2 zeigt den Adsorber 1, dessen äussere Schenkel mit einem Blech 17 verkleidet sind. Das Blech 17 kann dabei, wie im dargestellten Beispiel, als Gehäuse für die erforderlichen Bauteile ausgebildet sein. Dabei können mehrere Adsorber hintereinander auf dem Blech angeordnet sein.

Figur 3 zeigt eine übliche Adsorberanlage unter Verwendung eines erfindungsgemässen Adsorbers in Containerbauweise.

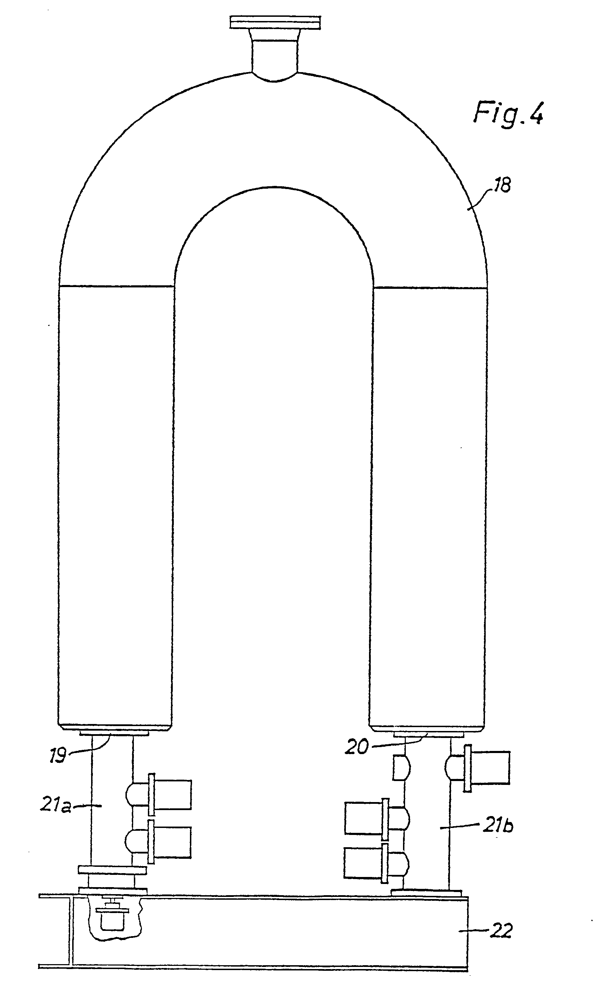

In Figur 4 ist ein um 180° abgewinkelter Adsorber 18 grob schematisch dargestellt. Der Gaseinlass 19 und der Gausaustritt 20 sind jeweils mit einem Ventilblock 21a bzw. 21b verbunden. Der Ventilblock steht dabei mit dem Grundrahmen 22 in Verbindung. Der Grundrahmen kann als Schalldämpferkasten ausgebildet sein.

**Patentansprüche**

1. Adsorber für Druckwechselbetrieb mit Adsorptionsmittelfüllung, Gaseinlass und Gasaustritt, dadurch gekennzeichnet, dass der Adsorber (1) als abgewinkeltes Rohr mit oben liegendem Scheitel ausgebildet ist.

2. Adsorber nach Anspruch 1, dadurch gekennzeichnet, dass am Scheitel ein Nachfüllstutzen (2) für das Adsorptionsmittel und an den Adsorberenden ein Gaseinlass- (3, 19) bzw. ein Gausaustrittsstutzen (7, 20) angeordnet ist.

3. Adsorber nach Anspruch 1 oder 2, dadurch gekennzeichnet, dass der Gaseinlass und der Gasaustritt mit je einem Sieb verschlossen sind.

4. Adsorber nach einem der Ansprüche 1 bis 3, dadurch gekennzeichnet, dass die Adsorberschenkel (1a, 1b) unterschiedliche Durchmesser aufweisen.

5. Adsorber nach einem der Ansprüche 1 bis 4, dadurch gekennzeichnet, dass an den Gaseinlass (3, 19) und den Gasaustritt (7, 20) je ein Ventilblock (21a, 21b) mit in die Hauptanschlussleitungen integrierten Ventilen angeschlossen ist.

6. Adsorber nach einem der Ansprüche 1 bis 5, dadurch gekennzeichnet, dass die Adsorberschenkel (1a, 1b) in einem Grundrahmen (16) befestigt sind.

7. Adsorber nach Anspruch 6, dadurch gekennzeichnet, dass der Grundrahmen (16) als Schalldämpferkasten (22) ausgebildet ist.

8. Adsorber nach einem der Ansprüche 1 bis 7, dadurch gekennzeichnet, dass in dem unter dem Adsorber befindlichen Raum Ventile und andere Bauteile einer Adsorberanlage untergebracht sind.

9. Adsorberanlage mit mindestens zwei Adsorbern nach einem der Ansprüche 1 bis 8 und zugehörigen Ventilen, dadurch gekennzeichnet, dass die Ventile in mindestens einem Ventilblock integriert und die Adsorber an den Ventilblock angeschlossen sind.

10. Adsorberanlage mit Ventilen, Pufferbehälter, Kompressoren, Schalldämpfer, Mess- und Steuereinrichtung und mindestens zwei Adsorbern nach einem der Ansprüche 1 bis 8, dadurch gekennzeichnet, dass die Anlage in Containerbauweise ausgeführt ist.

11. Adsorberanlage nach Anspruch 10, dadurch gekennzeichnet, dass die Fläche zwischen den äusseren Adsorberschenkeln mit einer Verkleidung versehen ist.

12. Anwendung von Adsorbern nach einem der Ansprüche 1 bis 11 zur Gewinnung von Sauerstoff aus Luft.

13. Anwendung von Adsorbern nach einem der Ansprüche 1 bis 11 zur Gewinnung von Stickstoff aus Luft.

## Claims

1. Adsorber for pressure swing adsorption comprising an adsorbent, a gas inlet aperture and a gas outlet aperture, characterized in that the adsorber is shaped as a bended tube with the vertex lying at top.

2. Adsorber according to claim 1, characterized in that a refill-short feed pipe (2) for adsorbent is placed at the vertex and that connecting pieces for gas inlet (3, 19) respectively for gas outlet (7, 20) are provided at the ends of the adsorber.

3. Adsorber according to claims 1 or 2, characterized in that the gas inlet aperture and the gas outlet aperture are each provided with a sieve.

4. Adsorber according to any of claims 1 to 3, characterized in that the adsorber legs (19, 16) are of different diameter.

5. Adsorber according to any of claims 1 to 4, characterized in that a valve block (21a, 21b) containing valves integrated in the main conduit lines is provided at both the gas inlet aperture (3, 19) and the gas outlet aperture (7, 20).

6. Adsorber according to any of claims 1 to 5, characterized in that the adsorber legs (1a, 1b) are mounted in a basic framework (16).

7. Adsorber according to claim 6, characterized in that the basic framework (16) is constructed as a sound absorber box (22).

8. Adsorber according to any of claims 1 to 7, characterized in that valves and other component parts of an adsorption plant are arranged in the space below the adsorber.

9. Adsorption plant with at least two adsorbers according to any of claims 1 to 8 and with associated valves, characterized in that the valves are integrated in at least one valve block and that the adsorbers are connected to the valve block.

10. Adsorption plant with valves, a buffer tank, a compressor, a sound absorber, a unit of measurement and control and at least two adsorbes according to any of claims 1 to 8, characterized in that the plant is manufactured according to the container type of construction.

11. Adsorption plant according to claim 10, characterized in that the area between the outer adsorber legs is provided with a casing.

12. Application of adsorbers according to any of claims 1 to 11 for the separation of oxygen from air.

13. Application of adsorbers according to any of claims 1 to 11 for the separation of nitrogen from air.

## Revendications

Appareil d'adsorption apte à fonctionner en alternance de pression comportant un garnissage d'agent adsorbant, une entrée de gaz et une sortie de gaz, caractérisé en ce que l'appreil d'adsorption (1) est réalisé sous la forme d'un tube coudé dont le sommet (de l'angle) est disposé vers le haut.

2. Appareil d'adsorption selon la revendication 1, caractérisé en ce qu'un raccord de remplissage (2) d'agent adsorbant est disposé au sommet et en ce qu'un raccord d'entrée de gaz (3, 19) et un raccord de sortie de gaz (7, 20) sont disposés respectivement aux extrémités de l'appareil d'adsorption.

3. Appareil d'adsorption selon la revendication 1 ou 2, caractérisé en ce que l'entrée de gaz et la sortie de gaz sont fermées chacune par un filtre.

4. Appareil d'adsorption selon l'une des revendications 1 à 3, caractérisé en ce que les branches de l'appareil (1a, 1b) présentent des diamètres différents.

5. Appareil d'adsorption selon l'une des revendications 1 à 4, caractérisé en ce que l'entrée de gaz (3, 19) et la sortie de gaz (7, 20) sont chacune raccordées à un bloc de valve (21a, 21b) muni de valves intégrées dans les conduites de raccordement principales.

6. Appareil d'adsorption selon l'une des revendications 1 à 5, caractérisé en ce que les branches de l'appareil (1a, 1b) sont fixées à l'intérieur d'un cadre de base (16).

7. Appreil d'adsorption selon la revendication 6, caractérisé en ce que le cadre de base (16) est réalisé sous la forme d'un boîtier d'insonorisation (22).

8. Appareil d'adsorption selon l'une des revendications 1 à 7, caractérisé en ce que des valves et d'autres constituants d'une installation d'adsorption sont disposés dans l'espace situé en dessous de l'appareil d'adsorption.

9. Installation d'adsorption comportant au moins deux appareils d'adsorption selon l'une des revendications 1 à 8 et les valves attenantes, caractérisée en ce que les valves sont intégrées en au moins un bloc de valves auquel sont raccordés les appareils d'adsorption.

10. Installation d'adsorption comportant des valves, des récipients tampons, des compresseurs, des silencieux des moyens de mesure et de commande et au moins deux appareils d'adsorption selon l'une des revendications 1 à 8, caractérisée en ce que l'installation est réalisée sous une forme conteneurisée.

11. Installation d'adsorption selon la revendication 10, caractérisée en ce que la surface entre les branches extérieures de l'appareil d'adsorption est munie d'un revêtement.

12. Application des appareils d'adsorption selon l'une des revendications 1 à 11 à la récupération de l'oxygène de l'air.

13. Application des appareils d'adsorption selon l'une des revendications 1 à 11 à la récupération de l'azote de l'air.

Fig. 1

*Fig.2*

*Fig.3*

*Fig.4*